# EUROPEAN PATENT SPECIFICATION

(11) **EP 3 248 521 B1**
(45) Date of publication and mention of the grant of the patent: **22.05.2019**
(21) Application number: 17166778.5
(22) Date of filing: 18.04.2017
(51) Int. Cl.: A47J 42/40

(54) **DEVICE FOR CONTROLLING THE FLOW OF GROUND COFFEE COMING OUT FROM A COFFEE GRINDER**
VORRICHTUNG ZUM REGULIEREN DES FLUSSES VON GEMAHLENEM KAFFEE AUS EINER KAFFEEMÜHLE
APPAREIL POUR RÉGLER L'ÉCOULEMENT DE CAFÉ MOULÉ SORTANT D'UN MOULIN À CAFÉ

(30) Priority: 27.04.2016 IT UA20162938
(43) Date of publication of application: 29.11.2017
(73) Proprietor: Gruppo Cimbali S.p.A., 20082 Binasco (MI) (IT)
(72) Inventor: ABBIATI, Giacomo, 20082 Binasco (MI) (IT)
(74) Representative: Perani & Partners S.p.A.

(56) References cited:
- CH-A5- 566 759
- US-A- 5 042 731
- US-A1- 2015 238 040

## Description

The present invention relates to a device for imparting uniformity to the flow of ground coffee that comes from an "on-demand" actuated grinder-doser and directed, under the dispensing thrust of the latter, when in operation, toward the portafilter of an espresso coffee machine, in which said flow is collected until the amount corresponding to the dose required for beverage formation is reached, whereupon the grinder-doser stops, comprising a tubular conduit for said flow, an opening through which said flow is discharged, which is placed in the conduit in a point that overlies the location in which the portafilter is placed for receiving said flow of ground coffee, the section of said opening, as viewed transverse to the axis of the conduit for said flow of ground coffee, having a contour defined by a closed line.

Espresso coffee preparation is known to require a given dose of ground coffee to be placed in the portafilter.

In conventional prior art grinder-dosers, coffee beans in a hopper fall into the grinding chamber, in which they are ground. The coffee grounds are accumulated in a collecting chamber having a dosing device associated therewith.

Many type ground coffee dosers are known in the art.

One of these consists of a carousel including adjustable-volume chambers, which are entirely filled with the ground coffee as the latter comes from the grinding chamber into the collecting chamber.

When a given dose of coffee is required to be dispensed, the portafilter to be filled is placed at one opening of the dosing device, the chamber of the dosing device, which has been filled with the required dose of ground coffee, is placed at the same opening and the amount of ground coffee in said chamber, which is the desired dose, is discharged into the portafilter.

Other types of grinder-dosers with ground coffee dose collecting chambers from which the coffee flows into the portafilter are disclosed, for example, in EP 2 509.476, US 5 850 859, US 5 042 731 and CH 566 759.

In a conventional prior art grinder-doser as discussed above, a negligible variation exists between the amount prescribed for a given dose of ground coffee and the amount within the chamber of the doser, which is actually transferred into the portafilter, also considering a single-coffee dose, which is typically 7/8 grams of ground coffee, as the doser chambers are always entirely filled with the ground coffee that comes from the grinding chamber and flows into the collecting chamber associated with the doser.

In the so-called "on-demand" grinder-dosers, i.e. in grinder-dosers whose grinding chamber directly feeds the portafilter, which is located at the ground coffee discharge opening, the formation of a proper dose of ground coffee in the portafilter has been found to be somewhat problematic.

In "on-demand" grinder-dosers, the amount of ground coffee associated with the required dose is determined by the operation program of the grinder-doser, which automatically recognizes the portafilter as it is placed on the support of the grinder-doser, and determines the expected operating time for the grinder to dispense the required amount of ground coffee.

The determination of the operating time that is theoretically required for the grinder to exactly dispense a given amount of ground coffee to the portafilter would seem to only depend on the structural and functional characteristics of the grinder.

However, the ground coffee delivered by the delivery conduit was found in practice to have an irregular and oftentimes pulsed flow and, as a result, during the expected operating time of the grinder-doser, the portafilter will not receive the prescribed dose of ground coffee, and different, amounts thereof, not constant over time, will be instead received.

The irregular flow from the grinding chamber is caused in part by the type of burrs in use, e.g. by the shape and volume of their teeth, and in part by the electrostatic charge that accumulates in the grains of ground coffee as they flow within the delivery conduit, possibly at risk of partially blocking the latter. These aspects are particularly relevant in case of single coffee doses, typically consisting of 7/8 grams of ground coffee, for which a variation of 1 or 2 grams less, which is not even constant, is highly significant and affects the quality of the dispensed beverage.

Furthermore, this variation involves the drawback that dispensed beverages exhibit considerable qualitative differences from one dispensing event to another.

The object of the present invention is to obviate the above discussed drawbacks deriving from the irregular flow of ground coffee that comes from a so-called "on-demand" grinder-doser and is directed toward a portafilter of an espresso coffee machine, to form therein the predetermined dose of ground coffee required to prepare a corresponding beverage.

These and other objects, as better explained hereafter, are fulfilled by a device for controlling the uniformity of the flow of ground coffee that comes from an "on-demand" grinder-doser and is directed to the portafilter, as defined in claim 1 below.

The invention will be now described in greater detail with reference to a preferred embodiment thereof, given by way of illustration and without limitation, and shown in the annexed drawings, in which:
- Figure 1 shows a schematic perspective view of an "on-demand" coffee grinder-doser, which is equipped with the device for controlling uniformity of the flow of ground coffee according to one embodiment of the invention;
- Figure 2 shows a perspective view of a conventional portafilter designed for use with the grinder-doser of Fig. 1;
- Figure 3 shows a schematic view of the final section of the conduit through which the ground coffee that comes from the grinding chamber of the "on-demand" grinder-doser is discharged in to the underlying portafilter, in which the forces that act upon the device are indicated.

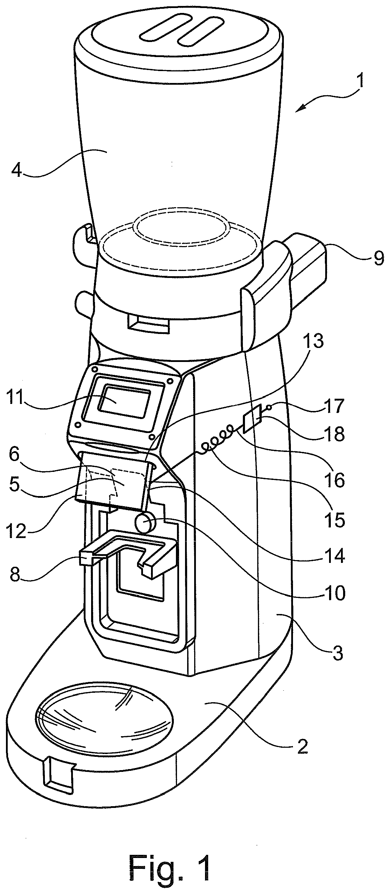

Referring to the aforementioned figures, and particularly to Figure 1, an "on-demand" grinder-doser is generally designated by numeral 1.

As is known in the art, the grinder-doser comprises a base 2 and a column 3 rising therefrom and containing the motor that drives the burrs, not shown. A container 4 with the coffee beans to be ground is placed at the top of the column 3.

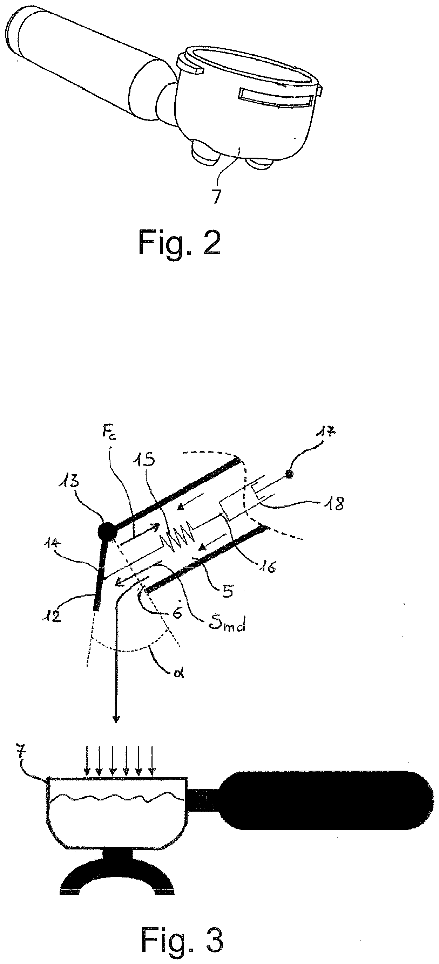

During grinding, the ground coffee is pushed into the discharge channel 5 by the dispensing thrust exerted by the grinder-doser. The ground coffee flows through the opening 6 of this channel directly into a portafilter, not shown in Figure 1, that has been placed on the support 8 projecting out of the column 3. Figure 2 shows a conventional portafilter 7 designed for use with the grinder-doser of Figure 1.

As is known in the art, the particle size of the ground coffee is controlled by a conventional device for moving the burrs toward and away from each other, whose control means, also comprising a motor, are schematically referenced 9. Numeral 10 schematically designates a sensor for detecting when the portafilter 7 is placed on the support 8 and possibly the dose with which the portafilter is filled.

Numeral 11 designates a conventional electronic display that has the function of a user interface, for adjusting and controlling the various motor members of the grinder-doser 1.

This "on-demand" grinder-doser has a device installed thereon for controlling the uniformity of the flow of ground coffee according to the invention.

This device comprises a partition 12 that is pivotally mounted to a pivot pin 13 located, for instance, on the upper side of the opening 6 of the channel 5.

The opening 6 has a contour defined by a closed line, here a quadrilateral. Alternatively, the contour of the opening 6 may also have a circular shape, depending on the shape of the discharge channel 5.

The partition 12, which has such a size as to be able to close the opening 6 of the conduit 5, is connected to the end 14 of an elastic member which is schematically shown in Figure 3 as a traction spring 15 whose other end 16 is connected to a fixed point 17, e.g. the column 3 of the grinder-doser, with a tensioner 18 interposed therebetween that has the purpose of adjusting and predetermining the force F_{c} exerted by the spring 15 to pull the partition 12 against the opening 6, thereby keeping the latter closed.

During the grinding operation, that will last the time required by a single coffee dose amount, the flow of ground coffee is pushed in the channel 5 by the delivery thrust of the grinder-doser, schematically referenced by the vector S_{md} in the functional schematic view of Figure 3.

The flow of ground coffee that is pushed in the channel 5 cannot come out of the opening 6 and accumulates against the partition 12 as the latter adheres to the opening 6 under the calibrated action of the spring 15.

The resistance opposed to the flow of ground coffee as it abuts the partition 12 increases the value of the delivery thrust S_{md} of the grinder-doser, which reaches and exceeds the traction value F_{c} of the spring 15 and causes an angular displacement of the partition 12, equal to an angle α in the example of Figure 3, for the flow of coffee to directly pour into the portafilter 7.

This flow is uniform until the grinder-doser stops once its operating time, corresponding to the time of delivery of an amount of ground coffee corresponding to the required dose, has expired.

As the grinder-doser stops, the flow of ground coffee also stops and the partition 12 moves back to its position against the opening 6 of the channel 5 under the action of the spring 15.

The device of the invention may be provided according to many different embodiments.

Thus, the spring 15 and the tensioner 18 may be replaced by different equivalent members for exerting an adjustable elastic pulling action on the partition 12.

For example, a torsion spring may be placed coaxial with the pivot pin 13, and its elastic action is controlled by a screw, also coaxial with the pin 13, which screw may also be motor-driven, for automated control of the load of said torsion spring.

Furthermore, as an alternative, the spring 15 and the tensioner 18 may be replaced by the provision of an electronic device control, e.g. a shape memory device, which cooperates with the partition 12 such that a change of power supply would lead to a change of the way in which it cooperates with the partition 12.

Since these are conventional arrangements, and in any case equivalent to the one that is schematically depicted in Figure 1, their description in further detail is deemed to be unnecessary.

## Claims

1. A device for imparting uniformity to the flow of a predetermined dose of ground coffee that comes from an "on-demand" grinder-doser (1) and directed, under the dispensing thrust of the latter, when in operation, toward a portafilter (7) of an espresso coffee machine, in which said flow is collected until the amount corresponding to the dose required for beverage formation is reached, whereupon the grinder-doser stops, comprising a tubular conduit (5) for said flow, an opening (6) through which said flow is discharged, which is placed in the conduit in a point that overlies the location (8) in which the portafilter (7) is placed for receiving said flow of ground coffee, the section of said opening, as viewed transverse to the axis of the conduit (5) for said flow of ground coffee, having a contour that extends along a closed line, a partition (12) connected to portion (13) of the contour of said opening (6), **characterised in that** said partition is able to angularly move toward the exterior of the opening between at least two angularly offset positions under the thrust of said flow of ground coffee and against elastic means (15), wherein said elastic means (15) that counteract the angular displacements of said partition (12) comprise members (18) for adjusting the intensity of the elastic force exerted thereby.

2. A device as claimed in claim 1, wherein said contour of the cross section of said opening (6) has a four-sided shape.

3. A device as claimed in claim 1 or 2, **characterized in that** said partition (12) is of such a size as to be able to close the opening (6) of the conduit (5) under the action of said elastic means (15).

4. A device as claimed in any of claims 1 to 3, wherein one of the angular positions taken by said partition is the position in which it closes said opening (6) when no ground coffee flows toward said opening (6).

5. A device as claimed in any of claims 1 to 4, wherein one of the angular positions that are taken by said partition during operation of the grinder-doser and dispensing of the flow of ground coffee is the one in which the dispensing thrust component (S_{md}) of the flow of ground coffee upon said partition (12) along the action line of the force F_{c} exerted by said elastic means (15) overcomes the latter.

6. A device as claimed in any of claims 1 to 5, wherein said elastic means comprise a traction spring (15) and the members for adjusting the intensity of the elastic force exerted by the elastic means that act on said partition (12) comprise a tensioner (18).

7. A device as claimed in any of claims 1 to 5, wherein said elastic means comprise a torsion spring, coaxially placed on a pin (13) by which the partition (12) is connected to the contour of said opening (6) and the members for adjusting the intensity of the elastic force exerted by said torsion spring comprise a loading screw.

8. A device as claimed in any of claims 1 to 5, wherein said members of adjusting the intensity of the elastic force exerted by said elastic means that act on said partition (12) comprise an electronic shape memory device, cooperating with the partition (12) such that a change of power supply would lead to a change of the way in which it cooperates with the partition (12).

9. A device as claimed in any of claims 6, 7, and 8, wherein said members for adjusting the intensity of the elastic force include motor means for actuation thereof, which are controlled via the user interface (11) of the grinder-doser.

## Patentansprüche

1. Vorrichtung, um dem Strom einer festgelegten Dosis gemahlenen Kaffees Gleichmäßigkeit zu verleihen, die von einem "On-Demand"-Mahldosierer (1) kommt und unter Abgabe von Vortrieb durch Letzteren, wenn in Betrieb, zu einem Siebträger (7) einer Espresso-Kaffeemaschine geführt wird, wobei der Strom gesammelt wird, bis die Menge, die der für die Getränkbildung erforderlichen Dosis entspricht, erreicht ist, worauf der Mahldosierer anhält, umfassend einen rohrförmigen Kanal (5) für den Strom, eine Öffnung (6), durch die der Strom ausgestoßen wird, der an einem Punkt in dem Kanal platziert wird, der über der Stelle (8) liegt, an der der Siebträger (7) platziert ist, um den Strom gemahlenen Kaffees aufzunehmen, wobei der Querschnitt der Öffnung, quer zur Achse des Kanals (5) für den Strom gemahlenen Kaffees gesehen, einen Umriss aufweist, der sich entlang einer geschlossenen Linie erstreckt, eine Trennwand (12), die mit einem Abschnitt (13) des Umrisses der Öffnung (6) verbunden ist, **dadurch gekennzeichnet, dass** die Trennwand in der Lage ist, sich unter dem Vortrieb des Stroms gemahlenen Kaffees und gegen elastische Mittel (1) winklig hin zum Äußeren der Öffnung zwischen mindestens zwei winklig verlagerten Positionen zu bewegen, wobei die elastischen Mittel (15), die den winkligen Verlagerungen der Trennwand (12) entgegenwirken, Elemente (18) zum Justieren der Intensität der davon ausgeübten elastischen Kraft umfassen.

2. Vorrichtung nach Anspruch 1, wobei der Umriss des Querschnitts der Öffnung (6) eine vierseitige Form aufweist.

3. Vorrichtung nach Anspruch 1 oder 2, **dadurch gekennzeichnet, dass** die Trennwand (12) eine derartige Größe aufweist, dass die in der Lage ist, die Öffnung (6) des Kanals (5) unter der Wirkung der elastischen Mittel (15) zu verschließen.

4. Vorrichtung nach einem der Ansprüche 1 bis 3, wobei eine der winkligen Positionen, die die Trennwand einnimmt, die Position ist, in der sie die Öffnung (6) verschließt, wenn kein gemahlener Kaffee zu der Öffnung (6) strömt.

5. Vorrichtung nach einem der Ansprüche 1 bis 4, wobei eine der winkligen Positionen, die die Trennwand während des Betriebs des Mahldosierers und der Abgabe des Stroms gemahlenen Kaffees einnimmt, diejenige ist, in der die Abgabevortriebkomponente (S_{md}) des Stroms gemahlenen Kaffees gegen die Trennwand (12) entlang der Wirkungslinie der Kraft F_{c}, die von den elastischen Mitteln (15) ausgeübt wird, diese überwindet.

6. Vorrichtung nach einem der Ansprüche 1 bis 5, wobei die elastischen Mittel eine Zugfeder (15) umfassen und die Elemente zum Justieren der Intensität der elastischen Kraft, die von den elastischen Mitteln ausgeübt wird, die auf die Trennwand (12) einwirken, eine Spannvorrichtung (18) umfassen.

7. Vorrichtung nach einem der Ansprüche 1 bis 5, wobei die elastischen Mittel eine Torsionsfeder umfassen, die axial auf einem Stift (13) platziert ist, durch den die Trennwand (12) mit dem Umriss der Öffnung (6) verbunden ist, und die Elemente zum Justieren der Intensität der elastischen Kraft, die von der Torsionsfeder ausgeübt wird, eine Belastungsschraube umfassen.

8. Vorrichtung nach einem der Ansprüche 1 bis 5, wobei die Elemente zum Justieren der Intensität der elastischen Kraft, die von den elastischen Mitteln ausgeübt wird, die auf die Trennwand (12) wirken, eine elektronische Formgedächtnisvorrichtung umfassen, die mit der Trennwand (12) derart zusammenwirkt, dass eine Änderung der Energiezufuhr zu einer Änderung der Art und Weise führen würde, wie sie mit der Trennwand (12) zusammenwirkt.

9. Vorrichtung nach einem der Ansprüche 6, 7 und 8, wobei die Elemente zum Justieren der Intensität der elastischen Kraft Motormittel zu deren Betätigung beinhalten, die über die Benutzerschnittstelle (11) des Mahldosierers gesteuert werden.

## Revendications

1. Dispositif permettant de conférer de l'uniformité au flux d'une dose prédéterminée de café moulu qui provient d'un moulin-doseur « à la demande » (1) et qui est dirigé, sous la poussée de distribution de ce dernier, lors du fonctionnement, vers un porte-filtre (7) d'une machine à expresso, dans lequel ledit flux est collecté jusqu'à ce que la quantité correspondant à la dose nécessaire à la préparation d'un breuvage est atteinte, après quoi le moulin-doseur s'arrête, comprenant un conduit tubulaire (5) pour ledit flux, une ouverture (6) à travers laquelle ledit flux est déversé, qui est placée dans le conduit à un point qui chevauche l'emplacement (8) au niveau duquel le porte-filtre (7) est placé pour recevoir ledit flux de café moulu, la section de ladite ouverture, vue transversalement par rapport à l'axe du conduit (5) pour ledit flux de café moulu, ayant un contour qui s'étend le long d'une ligne fermée, une cloison (12) étant reliée à une partie (13) du contour de ladite ouverture (6), **caractérisé en ce que** ladite cloison est apte à se déplacer de manière angulaire vers l'extérieur de l'ouverture entre au moins deux positions décalées de manière angulaire sous la poussée dudit flux de café moulu et contre des moyens élastiques (15), dans lequel lesdits moyens élastiques (15), qui compensent les déplacements angulaires de ladite cloison (12), comprennent des éléments (18) permettant de régler l'intensité de la force élastique exercée ainsi.

2. Dispositif selon la revendication 1, dans lequel ledit contour de la section transversale de ladite ouverture (6) a une forme de quadrilatère.

3. Dispositif selon la revendication 1 ou 2, **caractérisé en ce que** ladite cloison (12) est d'une taille telle qu'elle est apte à fermer l'ouverture (6) du conduit (5) sous l'action desdits moyens élastiques (15).

4. Dispositif selon l'une quelconque des revendications 1 à 3, dans lequel l'une des positions angulaires prises par ladite cloison est la position dans laquelle elle ferme ladite ouverture (6) lorsqu'il n'y a pas de café moulu circulant vers ladite ouverture (6).

5. Dispositif selon l'une quelconque des revendications 1 à 4, dans lequel l'une des positions angulaires qui sont prises par ladite cloison pendant le fonctionnement du moulin-doseur et la distribution du flux de café moulu est celle dans laquelle la composante de poussée de distribution (S_{md}) du flux de café moulu sur ladite cloison (12) le long de la ligne d'action de la force F_{c} exercée par lesdits moyens élastiques (15) dépasse cette dernière.

6. Dispositif selon l'une quelconque des revendications 1 à 5, dans lequel lesdits moyens élastiques comprennent un ressort de traction (15) et les éléments permettant de régler l'intensité de la force élastique exercée par les moyens élastiques agissant sur ladite cloison (12) comprennent un élément tendeur (18).

7. Dispositif selon l'une quelconque des revendications 1 à 5, dans lequel lesdits moyens élastiques comprennent un ressort de torsion, placé de manière coaxiale sur une broche (13) par laquelle la cloison (12) est reliée au contour de ladite ouverture (6) et les éléments permettant de régler l'intensité de la force élastique exercée par ledit ressort de torsion comprennent une vis de charge.

8. Dispositif selon l'une quelconque des revendications 1 à 5, dans lequel lesdits éléments permettant de régler l'intensité de la force élastique exercée par les moyens élastiques agissant sur ladite cloison (12) comprennent un dispositif électronique à mémoire de forme, coopérant avec la cloison (12) de telle sorte qu'une modification de l'alimentation électrique conduit à une modification de la manière dont il coopère avec la cloison (12).

9. Dispositif selon l'une quelconque des revendications 6, 7 et 8, dans lequel lesdits éléments permettant de régler l'intensité de la force élastique comprennent des moyens motorisés pour leur actionnement, qui sont commandés par l'intermédiaire de l'interface utilisateur (11) du moulin-doseur.
